# EUROPÄISCHE PATENTSCHRIFT

(11) **EP 2 499 387 B1**
(45) Veröffentlichungstag und Bekanntmachung des Hinweises auf die Patenterteilung: **29.04.2015**
(21) Anmeldenummer: 10798479.1
(22) Anmeldetag: 04.11.2010
(51) Int. Cl.: F16F 15/131, F16F 15/139, F16D 1/10, F16D 13/70

(54) **KUPPLUNGSAGGREGAT**
CLUTCH ASSEMBLY
ENSEMBLE EMBRAYAGE

(30) Priorität: 09.11.2009 DE 102009052517
(43) Veröffentlichungstag der Anmeldung: 19.09.2012
(73) Patentinhaber: Schaeffler Technologies AG & Co. KG, 91074 Herzogenaurach (DE)
(72) Erfinder: JUNKER, Uli, 77652 Offenburg (DE); MÜLLER, Jens, 77815 Bühl (DE); ZÜFLE, Markus, 77815 Bühl (DE)
(86) Internationale Anmeldenummer: PCT/DE2010/001288
(87) Internationale Veröffentlichungsnummer: WO 2011/054344

(56) Entgegenhaltungen:
- EP-A2- 1 632 687
- WO-A1-2008/046379
- WO-A2-2007/000151

## Beschreibung

Die Erfindung betrifft ein Kupplungsaggregat bestehend aus einer Baueinheit mit einem eine erste Baugruppe bildenden Zweimassenschwungrad enthaltend ein Primärteil und ein gegenüber diesem entgegen der Wirkung von Energiespeichern begrenzt verdrehbares Sekundärteil und eine zweite Baugruppe mit zumindest einer Reibungskupplung, wobei die beiden Baugruppen mittels einer Steckverbindung miteinander drehfest verbunden sind und ein Stützblech zur Vorspannung der Steckverzahnung radial entlang einem Flanschteil des Sekundärteils angeordnet ist.

Ein gattungsbildendes Kupplungsaggregat ist aus der WO 2007/000151 A2 mit einem an einer Brennkraftmaschine angeordneten Primärteil und einem entgegen der Wirkung von Energiespeichern wie Bogenfedern begrenzt verdrehbaren Sekundärteil bekannt. Hierbei wird eine Steckverbindung zwischen dem Zweimassenschwungrad und der Doppelkupplung gegen Klappern gesichert, indem ein federbelastetes Stützblech in eine Steckverzahnung der Steckverbindung eingebracht und an einem Flanschteil des Sekundärteils befestigt ist. Dabei kann das Stützblech von dem Flanschteil abheben und die in die Steckverzahnung einragenden Stützlaschen werden erhöhtem Verschleiß unterworfen.

Es ergibt sich daher die Aufgabe ein gattungsgemäßes Kupplungsaggregat bezüglich eines verbesserten Verschleißverhaltens weiterzubilden.

Die Aufgabe wird durch ein Kupplungsaggregat mit den Merkmalen des Patentanspruches 1 gelöst und bestehend unter anderem aus einer Baueinheit mit einem eine erste Baugruppe bildenden Zweimassenschwungrad enthaltend ein Primärteil und ein gegenüber diesem entgegen der Wirkung von Energiespeichern begrenzt verdrehbares Sekundärteil und eine zweite Baugruppe mit zumindest einer Reibungskupplung gelöst, wobei die beiden Baugruppen mittels einer Steckverbindung miteinander drehfest verbunden sind, ein Stützblech zur Vorspannung der Steckverzahnung radial entlang einem Flanschteil des Sekundärteils angeordnet ist und das Stützblech einen radial erweiterten Kragen aufweist, der ein radial nach innen erweitertes Scheibenteil des Primärteils radial übergreift.

Durch den radial erweiterten Kragen wird das Stützblech bezüglich seiner axialen Verlagerbarkeit durch das Scheibenteil des Primärteils abgestützt. Das Scheibenteil kann dabei mit einem mit der Kurbelwelle verbundenen Flanschteil eine Ringkammer für die zwischen Primärteil und Sekundärteil angeordneten Energiespeicher wie Bogenfedern sein und radial nach innen erweitert sein. Infolgedessen wird ohne weitere Befestigungsmittel das Stützblech von dem in die Ringkammer radial eingreifenden sekundärseitig die Energiespeicher beaufschlagenden Flanschteil und dem Scheibenteil axial abgestützt.

Die Abstützung erfolgt unter Berücksichtigung der Relativverdrehung des drehfest mit dem Flanschteil und damit mit dem Sekundärteil verbundenen Stützteils gegenüber dem Primärteil, indem zwischen dem Scheibenteil und dem Stützblech ein auf eine Verdrehung abgestimmter Anlagekontakt vorgesehen wird, das heißt, das Stützblech zwar axial jedoch mit einem vorgegebenen Reibeingriff verdrehbar an dem Scheibenteil abgestützt ist.

Gemäß dem erfinderischen Gedanken ist das Stützblech in eine zwischen Primärteil und Sekundärteil wirksame Reibeinrichtung integriert. Hierbei erstreckt sich der Kragen des Stützteils radial in die Reibeinrichtung, so dass dieses durch die Reibeinrichtung axial elastisch fixiert ist. Damit wird das Stützteil radial außen mittels der Reibeinrichtung und radial innen auf der Steckverzahnung axial elastisch aufgenommen, so dass eine axiale Verlagerung mit daraus folgendem Verschleiß unterbunden wird.

Der Kragen des Stützteils kann dabei zwischen dem Flanschteil des Sekundärteils und einem sekundärseitigen Bauteil mit einer Reibfläche oder zwischen dem Scheibenteil des Primärteils und einem primärseitigen Bauteil mit einer Gegenreibfläche aufgenommen sein und dadurch an der Reibeinrichtung nicht aktiv beteiligt sein. Alternativ kann das Stützteil mit seinem Kragen eine aktive Komponente der Reibeinrichtung bilden, wobei dieser eine Anlagefläche für einen axial wirksamen Energiespeicher oder eine Reibfläche aufweisen kann. Bildet der axial wirksame Energiespeicher zugleich die oder eine von mehreren Gegenreibflächen, kann der Kragen zugleich Reib- und Anlagefläche ausbilden. Es hat sich dabei als vorteilhaft gezeigt, wenn das Stützblech und das Flanschteil gemeinsam von einem axial wirksamen Energiespeicher axial vorgespannt werden und diese daher direkt aufeinander liegend angeordnet werden.

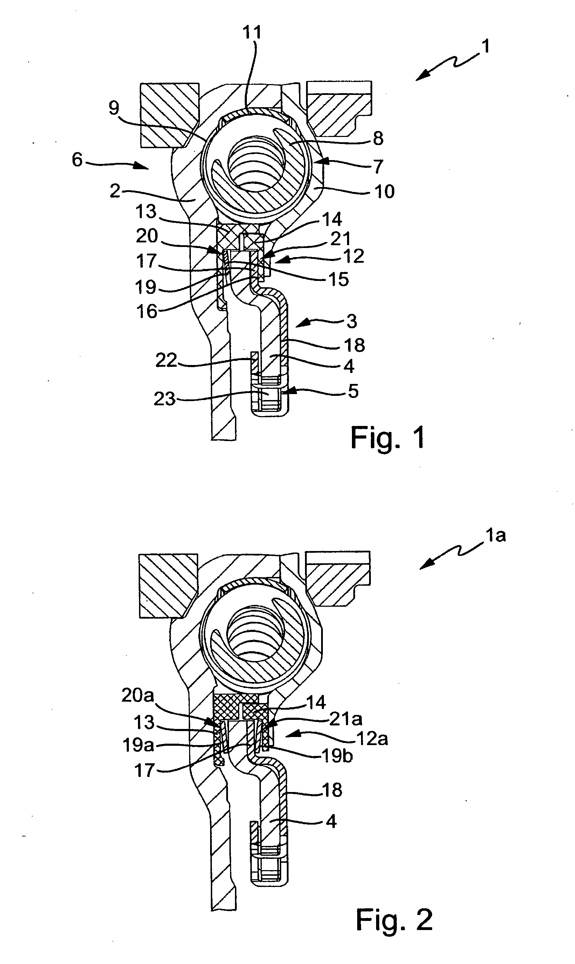

Die Erfindung wird anhand der in den Figuren 1 und 2 dargestellten Ausführungsbeispiele näher erläutert. Dabei zeigen:
- Figur 1: einen Teilschnitt durch ein Zweimassenschwungrad eines erfindungsgemäßen Kupplungsaggregats
und
- Figur 2: eine gegenüber dem Zweimassenschwungrad der Figur 1 leicht abgeänderte Version eines Zweimassenschwungrads mit geänderter Anordnung des Kragens des Stützblechs in der Reibeinrichtung.

Figur 1 zeigt die obere Hälfte des um eine Drehachse verdrehbaren Zweimassenschwungrads 1 im Tellschnitt. Das Zweimassenschwungrad 1 ist aus dem Primärteil 2 und dem Sekundärteil 3 gebildet, wobei von dem Sekundärteil 3 lediglich das Flanschteil 4 dargestellt und der übrige Teil, insbesondere dessen Schwungmasse in Form einer Reibungskupplung oder Doppelkupplung mittels der Steckverbindung 5 angekoppelt wird. Das Kupplungsaggregat bildet dabei eine Baueinheit mit der ersten Baugruppe 6 in Form des Zweimassenschwungrads 1 und einer mittels der Steckverbindung 5 nachgeschalteten Baugruppe in Form einer Reibungskupplung oder Doppelkupplung. Zur detaillierten Ausgestaltung möglicher Ausführungsformen von derartigen Kupplungsaggregaten wird auf die WO 2007/000151 A2 verwiesen.

Das Primärteil 2 und das Sekundärteil 3 sind entgegen der Wirkung der Energiespeicher 7 in Form von über den Umfang angeordneten Bogenfedern 8 gegeneinander begrenzt verdrehbar. Dabei beaufschlagen Primärteil 2 und das Flanschteil 3 die Bogenfedern 8 jeweils stirnseitig, so dass diese bei einer Relativverdrehung von Primärteil 2 und Sekundärteil 3 komprimiert werden. Zur Aufnahme der Bogenfedern 8 ist eine Ringkammer 9 ausgebildet. Hierzu ist das Primärteil 2 mit einem Scheibenteil 10 verbunden wie verschweißt. In dem Primärteil 2 und dem Scheibenteil 10 sind zur Beaufschlagung der Bogenfedern Beaufschlagungsbereiche eingeformt. Zur sekundärseitigen Beaufschlagung weist das Flanschteil 4 radial erweiterte, in die Ringkammer 9 von radial innen eingreifenden Arme auf. Zur Schmierung der Bogenfedern 8 und deren Kontaktstellen zum Primärteil 2, dem Scheibenteil 10, den Armen des Flanschteils 4 und der radial außerhalb der Bogenfedern 8 angeordneten Verschleißschutzschalen 11 kann die Ringkammer 9 zumindest teilweise mit einem Schmiermedium wie Fett befüllt sein.

Zur Überlagerung der schwingungsdämpfenden Komprimierung und Entspannung der Bogenfedern 8 mit einer Hysterese ist radial innerhalb der Bogenfedern 8 die Reibeinrichtung 12 vorgesehen. In dem gezeigten Ausführungsbeispiel sind hierzu in dem Primärteil 2 und dem Scheibenteil 10 sich radial außen axial übergreifende und damit die Ringkammer 9 abdichtende Reibscheiben 13, 14, die beispielsweise wegen der Ausbildung eines hohen Reibkoeffizienten mit Stahl aus Kunststoff hergestellt sind, drehfest aufgenommen. Die Reibscheiben 13, 14 bilden Gegenreibflächen 15, 16 für die relativ zu diesen verdrehten sekundärseitigen Bauteile aus. Diese sind in dem gezeigten Ausführungsbeispiel einerseits durch den radial erweiterten, den Innenumfang des Scheibenteils 10 radial übergreifenden Kragen 17 des Stützblechs 18 und andererseits durch den axial wirksamen, mit dem Flanschteil 4 drehfest verbundenen Energiespeicher 19 gebildet. Hierzu bilden der Kragen 17 und der hier als Tellerfeder ausgebildete Energiespeicher 19 jeweils eine Reibfläche 20, 21 zur Ausbildung eines durch die axiale Vorspannung des Energiespeichers 19 festgelegten Reibeingriffs.

Durch die axiale Einspannung des Kragens 17 des Stützblechs 18 in der Reibeinrichtung 12 legt sich das Stützblech 18 eng an das Flanschteil an, so dass dieses radial außen durch die Reibeinrichtung 12 und radial innen durch die die Steckverbindung am Klappern hindernden Laschen 22, die das Flanschteil 4 an dessen Zahnlücken 23 der Steckverbindung 5 axial übergreifen und nach radial außen umgelegt sind, axial abgestützt ist. Durch diese axiale Fixierung an dem Flanschteil verringert sich der Verschleiß insbesondere an den Kontaktstellen der Laschen 22 zu der Steckverbindung 5 und erhöht damit die Lebensdauer des Stützblechs 18.

Figur 2 zeigt in Abänderung zu dem Zweimassenschwungrad 1 der Figur 1 das Zweimassenschwungrad 1 a mit einer geänderten Reibeinrichtung 12a. Im Unterschied zur Reibeinrichtung 12 der Figur 1 sind in der Reibeinrichtung 12a zwei axial wirksame Energiespeicher 19a, 19b wie Tellerfedern vorgesehen, die an dem Flanschteil 4 beziehungsweise an dem Stützblech 18 drehfest aufgenommen wie eingehängt sind und jeweils eine Reibfläche 20a, 21 a gegenüber den Reibscheiben 13, 14 aufweisen. Dadurch werden das Flanschteil 4 und der Kragen 17 des Stützblechs 18 direkt axial aufeinander mittels jeweils eines Energiespeichers 19a, 19b verspannt.

### Bezugszeichenliste

- 1: Zweimassenschwungrad
- 1a: Zweimassenschwungrad
- 2: Primärteil
- 3: Sekundärteil
- 4: Flanschteil
- 5: Steckverbindung
- 6: Baugruppe
- 7: Energiespeicher
- 8: Bogenfeder
- 9: Ringkammer
- 10: Scheibenteil
- 11: Verschleißschutzschale
- 12: Reibeinrichtung
- 12a: Reibeinrichtung
- 13: Reibscheibe
- 14: Reibscheibe
- 15: Gegenreibfläche
- 16: Gegenreibfläche
- 17: Kragen
- 18: Stützblech
- 19: Energiespeicher
- 19a: Energiespeicher
- 19b: Energiespeicher
- 20: Reibfläche
- 20a: Reibfläche
- 21: Reibfläche
- 21a: Reibfläche
- 22: Lasche
- 23: Zahnlücke

## Patentansprüche

1. Kupplungsaggregat bestehend aus einer Baueinheit mit einem eine erste Baugruppe (6) bildenden Zweimassenschwungrad (1, 1a) enthaltend ein Primärteil (2) und ein gegenüber diesem entgegen der Wirkung von Energiespeichern (7) begrenzt verdrehbares Sekundärteil (3) und eine zweite Baugruppe mit zumindest einer Reibungskupplung, wobei die beiden Baugruppen mittels einer Steckverbindung (5) miteinander drehfest verbunden sind und ein Stützblech (18) zur Vorspannung der Steckverbindung (5) radial entlang einem Flanschteil (4) des Sekundärteils (3) angeordnet ist, wobei das Stützblech (18) einen radial erweiterten Kragen (17) aufweist, der ein radial nach innen erweitertes Scheibenteil (10) des Primärteils (2) radial übergreift, und das Stützblech (18) axial und verdrehbar an dem Scheibenteil (10) abgestützt ist, **dadurch gekennzeichnet, dass** das Stützblech (18) in eine zwischen Primärteil (2) und Sekundärteil (3) wirksame Reibeinrichtung (12, 12a) integriert ist.

2. Kupplungsaggregat nach Anspruch 1, **dadurch gekennzeichnet, dass** der Kragen (17) eine Reibfläche (21) aufweist und axial gegen eine am Scheibenteil (10) vorgesehene, gegebenenfalls an einer mit diesem drehfest verbundenen Reibscheibe (14) angeordnete Gegenreibfläche (16) vorgespannt wird.

3. Kupplungsaggregat nach Anspruch 2, **dadurch gekennzeichnet, dass** das Stützblech (18) und das Flanschteil (4) gemeinsam von zumindest einem axial wirksamen Energiespeicher (19, 19a, 19b) axial vorgespannt werden.

4. Kupplungsaggregat nach einem der Ansprüche 2 oder 3, **dadurch gekennzeichnet, dass** zumindest eine Reibfläche (20, 20a, 21 a) von einem axial wirksamen Energiespeicher (19a, 19b) gebildet wird.

## Claims

1. Clutch assembly consisting of a structural unit with a two-mass flywheel (1, 1a) which forms a first module (6), comprising a primary part (2) and a secondary part (3) which can be rotated to a limited extent with respect to the said primary part (2) counter to the action of energy stores (7), and a second module with at least one friction clutch, the two modules being connected fixedly to one another so as to rotate together by means of a plug-in connection (5), and a supporting plate (18) for prestressing the plug-in connection (5) being arranged radially along a flange part (4) of the secondary part (3), the supporting plate (18) having a radially widened collar (17) which engages radially over a radially inwardly widened disc part (10) of the primary part (2), and the supporting plate (18) being supported axially and rotatably on the disc part (10), **characterized in that** the supporting plate (18) is integrated into a frictional device (12, 12a) which is active between the primary part (2) and the secondary part (3).

2. Clutch assembly according to Claim 1, **characterized in that** the collar (17) has a frictional face (21) and is prestressed axially against a corresponding frictional face (16) which is provided on the disc part (10) and is possibly arranged on a frictional disc (14) which is connected fixedly to the said disc part (10) so as to rotate with it.

3. Clutch assembly according to Claim 2, **characterized in that** the supporting plate (18) and the flange part (4) are jointly prestressed axially by at least one axially active energy store (19, 19a, 19b).

4. Clutch assembly according to either of Claims 2 and 3, **characterized in that** at least one frictional face (20, 20a, 21a) is formed by an axially active energy store (19a, 19b).

## Revendications

1. Ensemble d'embrayage constitué d'une unité structurelle avec un volant d'inertie à deux masses (1, 1a) formant un premier module (6) contenant une partie primaire (2) et une partie secondaire (3) pouvant tourner de manière limitée par rapport à celle-ci à l'encontre de l'effet d'accumulateurs d'énergie (7) et un deuxième module avec au moins un embrayage à friction, les deux modules étant connectés de manière solidaire en rotation l'un à l'autre au moyen d'une connexion par enfichage (5) et une tôle de support (18) étant disposée pour la précontrainte de la connexion par enfichage (5) radialement le long d'une partie de bride (4) de la partie secondaire (3), la tôle de support (18) présentant un collet élargi radialement (17) qui vient en prise radialement par le dessus avec une partie de disque (10) élargie radialement vers l'intérieur de la partie primaire (2) et la tôle de support (18) étant supportée axialement et de manière rotative sur la partie de disque (10), **caractérisé en ce que** la tôle de support (18) est intégrée dans un dispositif de friction (12, 12a) agissant entre la partie primaire (2) et la partie secondaire (3).

2. Ensemble d'embrayage selon la revendication 1, **caractérisé en ce que** le collet (17) présente une surface de friction (21) et est précontraint axialement contre une surface de friction conjuguée (16) prévue sur la partie de disque (10), éventuellement disposée sur un disque de friction (14) connecté de manière solidaire en rotation à celle-ci.

3. Ensemble d'embrayage selon la revendication 2, **caractérisé en ce que** la tôle de support (18) et la partie de bride (4) sont précontraintes axialement ensemble par au moins un accumulateur d'énergie agissant axialement (19, 19a, 19b).

4. Ensemble d'embrayage selon l'une quelconque des revendications 2 ou 3, **caractérisé en ce qu'**au moins une surface de friction (20, 20a, 21a) est formée par un accumulateur d'énergie agissant axialement (19a, 19b).
